# EUROPEAN PATENT APPLICATION

(11) **EP 4 598 207 A1**
(43) Date of publication of application: **06.08.2025**
(21) Application number: 22960959.9
(22) Date of filing: 29.09.2022
(51) Int. Cl.: H04W 72/20

(54) **TERMINAL, BASE STATION, WIRELESS COMMUNICATION SYSTEM, AND WIRELESS COMMUNICATION METHOD**

(71) Applicant: NTT DOCOMO, INC., Tokyo 100-6150 (JP)
(72) Inventor: OKANO Mayuko, Tokyo 100-6150 (JP); HARADA Hiroki, Tokyo 100-6150 (JP); MATSUMURA Yuki, Tokyo 100-6150 (JP); YOSHIOKA Shohei, Tokyo 100-6150 (JP); OKAMURA Masaya, Tokyo 100-6150 (JP)
(74) Representative: Hoffmann Eitle
(86) International application number: PCT/JP2022/036601
(87) International publication number: WO 2024/069900

(57) **Abstract**

A terminal includes: a reception unit that receives a single piece of specific downlink control information which schedules a channel for transmission via two or more carriers; and a control unit that determines a specific resource element which corresponds to the specific downlink control information, in which the control unit uses a specific parameter for the specific downlink control information, so as to determine the specific resource element.

## Description

### TECHNICAL FIELD

The present disclosure relates to a terminal, a base station, a radio communication system, and a radio communication method which support a mechanism for scheduling a PDSCH or a PUSCH transmitted by two or more CCs by one DCI transmitted by a certain CC.

### BACKGROUND ART

The 3rd Generation Partnership Project (3GPP) has prepared a specification for the 5th generation mobile communication system (also referred to as 5G, New Radio (NR), or Next Generation (NG)), and further a specification for a next-generation system referred to as Beyond 5G, 5G Evolution, or 6G is also being prepared.

Further, Carrier Aggregation (CA) for both intra-band and inter-band is under investigation in 3GPP Release 18. Specifically, the introduction of a mechanism is under investigation, and the mechanism is for scheduling a Physical Downlink Shared Channel (PDSCH) or a Physical Uplink Shared Channel (PUSCH) transmitted by two or more Component Carriers (CCs) by one Downlink Control Information (DCI) transmitted by a certain CC. This kind of mechanism may be referred to as Single DCI Multi-carrier PDSCH/PUSCH scheduling or Single DCI Multi-Cell PDSCH/PUSCH scheduling (for example, Non-Patent Literature 1).

### CITATION LIST

### NON-PATENT LITERATURE

Non-Patent Literature 1: "New WID on Multi-carrier enhancements", RP-213577, 3GPP TSG RAN Meeting #94e, 3GPP, December 2021

### SUMMARY OF THE INVENTION

Incidentally, since Release 17 or earlier, a technology for aligning the size of DCI (hereinafter referred to as DCI size alignment) such that the size of the DCI satisfies a condition has been adopted. Meanwhile, it has been agreed to introduce new DCI as the DCI used in Single DCI Multi-carrier PDSCH/PUSCH scheduling.

Under this kind of background, as a result of intensive investigation, the inventors have found the necessity to prepare a mechanism for appropriately performing DCI size alignment assuming a case where Single DCI Multi-carrier PDSCH/PUSCH scheduling is configured.

The present invention has been made in order to solve the problem described above, and an object of the present invention is to provide a terminal, a base station, a radio communication system, and a radio communication method which enable that DCI size alignment is appropriately performed assuming a case where Single DCI Multi-carrier PDSCH/PUSCH scheduling is configured.

An aspect of the present disclosure provides a terminal including: a reception unit that receives downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

An aspect of the present disclosure provides a base station including: a transmission unit that transmits downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

An aspect of the present disclosure provides a radio communication system including: a terminal; and a base station, in which the terminal includes: a reception unit that receives downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

An aspect of the present disclosure provides a radio communication method including: a step A of receiving downlink control information, and a step B of assuming a specific control for aligning a size of the downlink control information, when monitoring of a format of one specific downlink control information that schedules a channel transmitted by two or more carriers is configured, in which the specific downlink control information is one of the downlink control information.

### BRIEF DESCRIPTION OF THE DRAWINGS

[FIG. 1] FIG. 1 is an overall schematic configuration diagram of a radio communication system 10.
[FIG. 2] FIG. 2 is a diagram showing a frequency range used in the radio communication system 10.
[FIG. 3] FIG. 3 is a diagram showing configuration examples of radio frames, subframes, and slots used in the radio communication system 10.
[FIG. 4] FIG. 4 is a functional block diagram of a UE 200.
[FIG. 5] FIG. 5 is a functional block diagram of a gNB 100.
[FIG. 6] FIG. 6 is a diagram for explaining Self carrier scheduling.
[FIG. 7] FIG. 7 is a diagram for explaining Cross carrier scheduling.
[FIG. 8] FIG. 8 is a diagram for explaining Multi carrier scheduling.
[FIG. 9] FIG. 9 is a diagram showing an example of a hardware configuration of the gNB 100 and the UE 200.
[FIG. 10] FIG. 10 is a diagram showing a configuration example of a vehicle 2001

### DESCRIPTION OF EMBODIMENT

An embodiment will be explained below with reference to the accompanying drawings. Note that the same or similar reference numerals have been attached to the same functions and configurations, and the description thereof will be omitted as appropriate.

### [Embodiment]

### (1) Overall schematic configuration of radio communication system

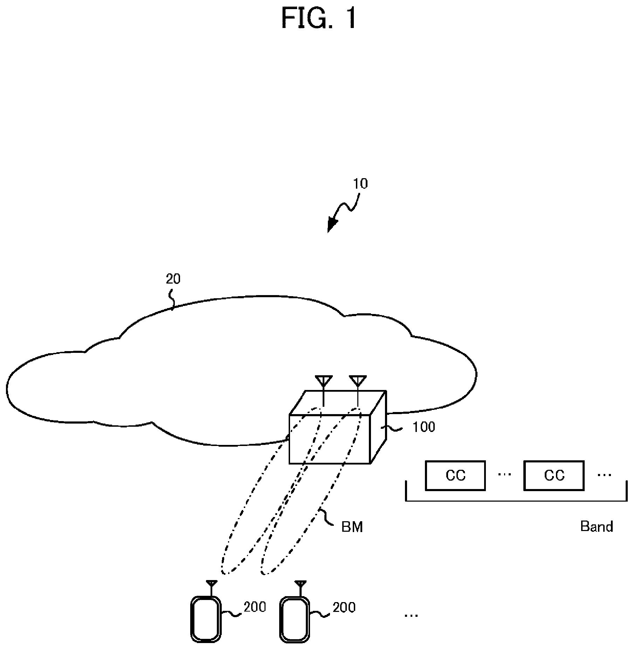

FIG. 1 is an overall schematic configuration diagram of a radio communication system 10 according to an embodiment. The radio communication system 10 is in accordance with 5G New Radio (NR), and includes a Next Generation-Radio Access Network 20 (hereinafter referred to as NG-RAN 20) and a terminal 200 (hereinafter referred to as User Equipment (UE) 200).

The radio communication system 10 may be in accordance with a method referred to as Beyond 5G, 5G Evolution, or 6G.

The NG-RAN 20 includes a base station 100 (hereinafter referred to as gNB 100). A specific configuration of the radio communication system 10 including the number of the gNB 100 and the UE 200 is not limited to an example shown in FIG. 1.

The NG-RAN 20 actually includes a plurality of NG-RAN Nodes, specifically gNBs (or ng-eNBs), and is connected to a core network in accordance with 5G (hereinafter referred to as 5GC, not shown). The NG-RAN 20 and 5GC may simply be described as a "network".

The gNB 100 is in accordance with 5G and performs radio communication in accordance with 5G with the UE 200. The gNB 100 and the UE 200 can support Massive Multiple-Input Multiple-Output (MIMO) generating a beam BM with higher directivity by controlling radio signals transmitted from a plurality of antenna elements, carrier aggregation (CA) bundling and using a plurality of component carriers (CCs), and dual connectivity (DC) simultaneously communicating with two or more transport blocks between a UE and each of two NG-RAN Nodes.

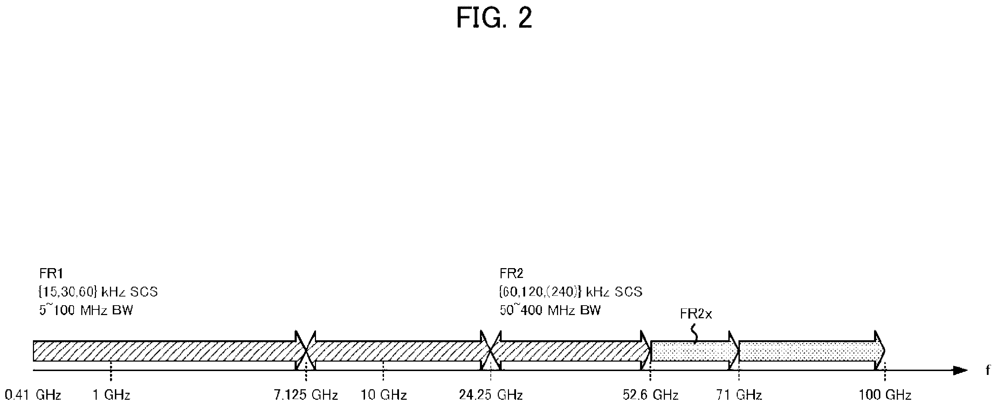

Further, the radio communication system 10 supports a plurality of frequency ranges (FRs). FIG. 2 shows frequency ranges used in the radio communication system 10.

As shown in FIG. 2, the radio communication system 10 supports FR 1, FR 2-1, and FR 2-2. Frequency bands of each FR are as follows.
- FR 1: 410 MHz to 7.125 GHz
- FR 2-1: 24.25 GHz to 52.6 GHz
- FR 2-2: 52.6 GHz to 71 GHz

In the FR 1, Subcarrier Spacing (SCS) of 15, 30, or 60 kHz is used, and bandwidth (BW) of 5 to 100 MHz may be used. The FR 2-1 has higher frequency than the FR 1, and in the FR 2-1, SCS of 60 or 120 kHz (SCS of 240 kHz may be included) is used, and bandwidth (BW) of 50 to 400 MHz may be used. The FR 2-2 has higher frequency than the FR 2-1, and in the FR 2-2, SCS of 120, 480 kHz, or 960 kHz is used, and bandwidth (BW) of 400 to 2000 MHz may be used.

SCS may be interpreted as numerology. Numerology is defined in 3GPP TS38.300 and corresponds to one subcarrier interval in a frequency domain.

Further, the radio communication system 10 also supports a frequency band which is higher than the frequency band of the FR 2-2. Specifically, the radio communication system 10 supports a frequency band of more than 52.6 GHz and 71 GHz or 114.25 GHz or less. This kind of high frequency band may be referred to as "FR 2x" for convenience.

In order to solve a problem that the influence of phase noise increases in a high frequency band, when a band of more than 52.6 GHz is used, Cyclic Prefix-Orthogonal Frequency Division Multiplexing (CP-OFDM)/Discrete Fourier Transform - Spread (DFT-S-OFDM) with larger Subcarrier Spacing (SCS) may be applied.

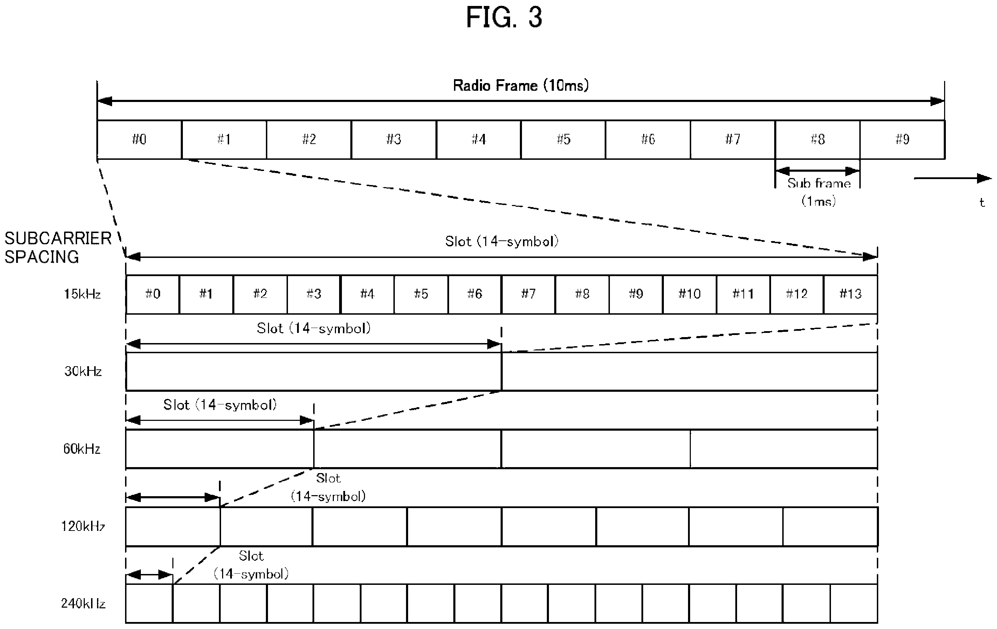

FIG. 3 shows configuration examples of radio frames, subframes, and slots used in the radio communication system 10.

As shown in Fig. 3, 14 symbols constitute one slot, and the larger (wider) the SCS, the shorter the symbol period (and the slot period). The SCS is not limited to a spacing (frequency) shown in FIG. 3. For example, 480 kHz or 960 kHz may be used.

Further, the number of symbols constituting one slot does not necessarily have to be 14 (for example, 28 symbols, 56 symbols). In addition, the number of slots per subframe may vary depending on the SCS.

Note that a time direction (t) shown in FIG. 3 may be referred to as a time domain, symbol period, or symbol time. Further, a frequency direction may be referred to as a frequency domain, resource block, subcarrier, or Bandwidth Part (BWP).

A DMRS is a kind of reference signal and is prepared for various channels. In this case, unless otherwise specified, the DMRS may means a DMRS for a downlink data channel, specifically a DMRS for a Physical Downlink Shared Channel (PDSCH). However, a DMRS for an uplink data channel, specifically a DMRS for a Physical Uplink Shared Channel (PUSCH) may be interpreted in the same manner as the DMRS for PDSCH.

The DMRS may be used for channel estimation in the UE 200 including a device as part of coherent demodulation, for example. The DMRS may exist only in a resource block (RB) used for PDSCH transmission.

The DMRS may have a plurality of mapping types. Specifically, the DMRS has mapping type A and mapping type B. In the mapping type A, the first DMRS is allocated to a second or third symbol in a slot. In the mapping type A, the DMRS may be mapped based on a slot boundary regardless of where in the slot actual data transmission is initiated. The reason why the first DMRS is allocated to the second or third symbol in the slot may be interpreted as to allocate the first DMRS after control resource sets (CORESET).

In the mapping type B, the first DMRS may be placed on a first symbol of data allocation. That is, a location of the DMRS may be given relative to where data is located, rather than relative to the slot boundary.

Further, the DMRS may have a plurality of Types. Specifically, the DMRS has Type 1 and Type 2. Type 1 and Type 2 differ in mapping and the maximum number of orthogonal reference signals in a frequency domain. In Type 1, it is possible to output a maximum of four orthogonal signals with a single-symbol DMRS, and in Type 2, it is possible to output a maximum of eight orthogonal signals with a double-symbol DMRS.

### (2) Functional block configuration of radio communication system

Next, a functional block configuration of the radio communication system 10 will be described.

First, a functional block configuration of the UE 200 will be described.

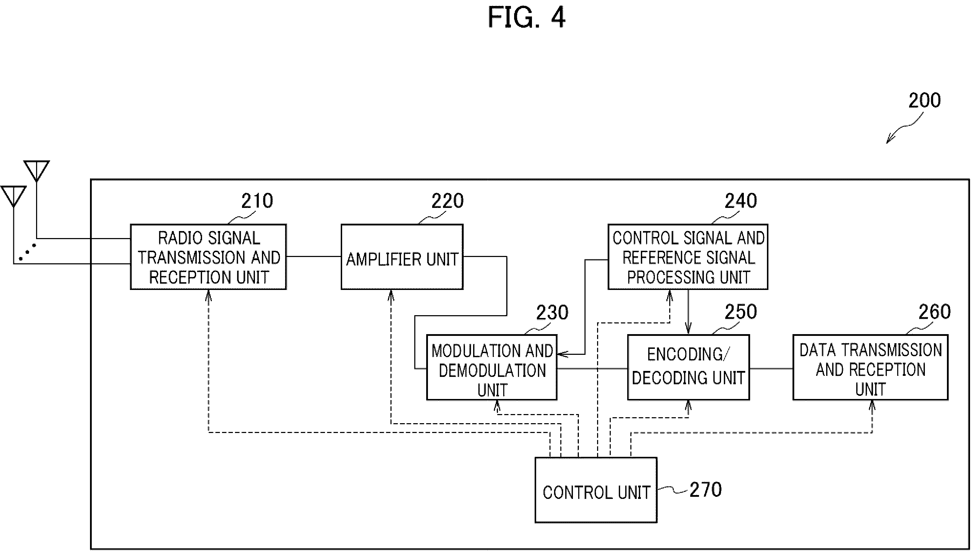

FIG. 4 is a functional block diagram of the UE 200. As shown in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

The radio signal transmission and reception unit 210 transmits and receives radio signals in accordance with NR. The radio signal transmission and reception unit 210 supports Massive MIMO, CA bundling and using a plurality of CCs, and DC communicating simultaneously between a UE and each of two NG-RAN Nodes.

The amplifier unit 220 includes a Power Amplifier (PA)/Low Noise Amplifier (LNA) or the like. The amplifier unit 220 amplifies a signal output from the modulation and demodulation unit 230 to a predetermined power level. Further, the amplifier unit 220 amplifies an RF signal output from the radio signal transmission and reception unit 210.

The modulation and demodulation unit 230 performs data modulation/demodulation, transmission power configuration, resource block allocation, and the like for each predetermined communication destination (gNB 100 or other gNBs). In the modulation and demodulation unit 230, Cyclic Prefix-Orthogonal Frequency Division Multiplexing (CP-OFDM)/Discrete Fourier Transform - Spread (DFT-S-OFDM) may be applied. Further, DFT-S-OFDM may be used not only for an uplink (UL) but also for a downlink (DL).

The control signal and reference signal processing unit 240 performs processing for various control signals transmitted and received by the UE 200, and processing for various reference signals transmitted and received by the UE 200.

Specifically, the control signal and reference signal processing unit 240 receives various control signals transmitted from the gNB 100 via a predetermined control channel, for example, control signals of a radio resource control layer (RRC). Further, the control signal and reference signal processing unit 240 transmits various control signals to the gNB 100 via the predetermined control channel.

The control signal and reference signal processing unit 240 performs processing using reference signals (RSs) such as a Demodulation Reference Signal (DMRS) and a Phase Tracking Reference Signal (PTRS).

The DMRS is a terminal-specific reference signal (pilot signal) known between a base station and a terminal for estimating a fading channel used for data demodulation. The PTRS is a terminal-specific reference signal for the purpose of estimating phase noise, which becomes a problem in a high frequency band.

In addition to the DMRS and the PTRS, the reference signals may include a Channel State Information-Reference Signal (CSI-RS), a Sounding Reference Signal (SRS), and a Positioning Reference Signal (PRS) for position information.

Further, the channel includes a control channel and a data channel. The control channel includes a Physical Downlink Control Channel (PDCCH), a Physical Uplink Control Channel (PUCCH), a Random Access Channel (RACH), Downlink control information (DCI) including a Random Access Radio Network Temporary Identifier (RA-RNTI), and a Physical Broadcast Channel (PBCH).

Further, the data channel includes a Physical Downlink Shared Channel (PDSCH), a Physical Uplink Shared Channel (PUSCH), and the like. The data means data transmitted via a data channel. The data channel may be read as a shared channel.

Here, the control signal and reference signal processing unit 240 may receive downlink control information (DCI). The DCI includes, as existing fields, fields for storing DCI Formats, a Carrier indicator (CI), BWP indicator, Frequency Domain Resource Assignment (FDRA), Time Domain Resource Assignment (TDRA), Modulation and Coding Scheme (MCS), HARQ Process Number (HPN), New Data Indicator (NDI), Redundancy Version (RV), and the like.

A value stored in a DCI Format field is an information element for specifying a format of the DCI. A value stored in a CI field is an information element for specifying a CC to which the DCI is applied. A value stored in a BWP indicator field is an information element for specifying a BWP to which the DCI is applied. The BWP that can be specified using the BWP indicator is configured by an information element included in an RRC message (BandwidthPart-Config). A value stored in the FDRA field is an information element for specifying a frequency domain resource to which the DCI is applied. The frequency domain resource is identified by using the value stored in the FDRA field and the information element included in the RRC message (RA Type). A value stored in a TDRA field is an information element for specifying a time domain resource to which the DCI is applied. The time domain resource is identified by using the value stored in the TDRA field and the information element included in the RRC message (pdsch-TimeDomainAllocationList, pusch-TimeDomainAllocationList). The time domain resource may be identified by using the value stored in the TDRA field and a default table. A value stored in the MCS field is an information element for specifying an MCS to which the DCI is applied. The MCS is identified by using the value stored in the MCS and an MCS table. The MCS table may be specified by using the RRC message or identified by using RNTI scrambling. A value stored in an HPN field is an information element for specifying an HARQ Process to which the DCI is applied. A value stored in the NDI is an information element for identifying whether the data to which the DCI is applied is initial transmission data. A value stored in an RV field is an information element for specifying redundancy of data to which the DCI is applied.

In the embodiment, the control signal and reference signal processing unit 240 constitutes a reception unit that receives downlink control information (hereinafter referred to as DCI).

The DCI may include DCI that has been used since Release 17 or earlier (hereinafter referred to as existing DCI). The existing DCI may be referred to as first DCI. A format of the existing DCI may include one or more DCI formats selected from DCI formats 0_0 / 0_1 / 0_2 / 1_0 / 1_1 / 1_2 / 2_0 / 2_1 / 2_2 / 2_3 / 2_4 / 2_5 / 2_4 / 2_5 / 2_6/ 2_7 / 3 _0 / 3_1 / 4_0 / 4_1 / 4_2. The DCI formats may be DCI formats specified in TS38.212 V17.2.0 §7.3 "Downlink control information". DCI having DCI formats 0_0 / 1_0 may be referred to as fallback DCI. DCI having DCI formats 0_2 / 1_2 may be referred to as compact DCI. DCI having DCI formats 0_1 / 1_1 may be referred to as non-fallback DCI.

In addition, the DCI may include one specific downlink control information that schedules a channel transmitted by two or more carriers (hereinafter referred to as specific DCI). The specific DCI may be referred to as second DCI in terms of comparison with the existing DCI. The channel scheduled by one specific DCI may be a PDSCH or a PUSCH.

A mechanism for scheduling a PDSCH or a PUSCH transmitted by two or more CCs by one specific DCI transmitted by a certain CC is newly introduced. This kind of mechanism may be referred to as Single DCI Multi-carrier PDSCH/PUSCH scheduling or Single DCI Multi-Cell PDSCH/PUSCH scheduling. The specific DCI format may be referred to as DCI format 0_X, 1_X, or DCI format 0_3, 1_3.

The encoding/decoding unit 250 performs data division/connection, channel coding/decoding, and the like for each predetermined communication destination (gNB 100 or other gNBs).

Specifically, the encoding/decoding unit 250 divides data output from the data transmission and reception unit 260 into predetermined sizes, and performs channel coding on the divided data. Further, the encoding/decoding unit 250 decodes data output from the modulation and demodulation unit 230 and connects the decoded data.

The data transmission and reception unit 260 transmits and receives a Protocol Data Unit (PDU) and a Service Data Unit (SDU). Specifically, the data transmission and reception unit 260 performs assembly/disassembly and the like of PDUs/SDUs in a plurality of layers (a medium access control layer (MAC), a radio link control layer (RLC), and a packet data convergence protocol layer (PDCP), and the like). Further, the data transmission and reception unit 260 performs data error correction and re-transmission control based on a Hybrid Automatic Repeat Request (HARQ).

The control unit 270 controls each functional block constituting the UE 200. In the embodiment, the control unit 270 constitutes a control unit that assumes a specific control for aligning the size of the DCI, when monitoring of a format of one specific DCI which schedules a channel transmitted by two or more carriers is configured. As described above, the specific DCI is one of the DCI. A case where the monitoring of the format of one specific DCI is configured may be read as a case where Single DCI Multi-carrier PDSCH/PUSCH scheduling is configured, or may be read as a case where monitoring of both the format of the existing DCI and the format of the specific DCI are configured. The format of the existing DCI may be referred to simply as the existing DCI, and the format of the specific DCI may be referred to simply as the existing DCI. Details of the specific control will be described later.

Second, a functional block configuration of the gNB 100 will be described.

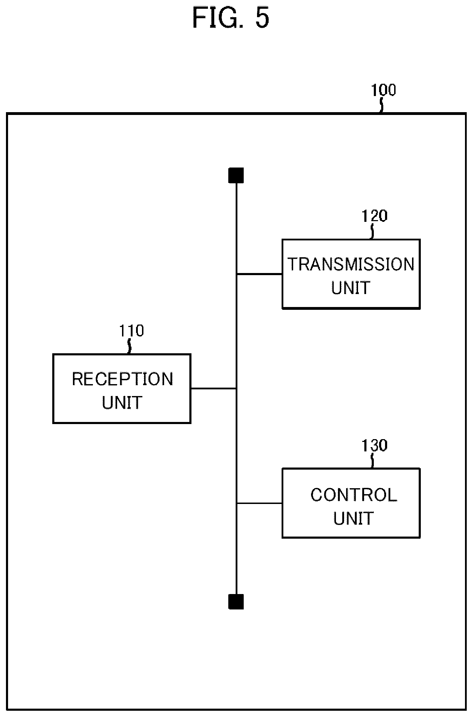

FIG. 5 is a functional block diagram of the gNB 100. As shown in FIG. 5, the gNB 100 includes a reception unit 110, a transmission unit 120, and a control unit 130.

The reception unit 110 receives various signals from the UE 200. The reception unit 110 may receive a UL signal via a PUCCH or a PUSCH.

The transmission unit 120 transmits various signals to the UE 200. The transmission unit 120 may transmit a DL signal via a PDCCH or a PDSCH. In the embodiment, the transmission unit 120 constitutes a transmission unit that transmits DCI.

The control unit 130 controls the gNB 100. In the embodiment, the control unit 130 constitutes a control unit that assumes a specific control for aligning the size of the DCI, when monitoring of a format of one specific DCI which schedules a channel transmitted by two or more carriers is configured. The specific control may be considered to be a control performed by the gNB 100 (control unit 130).

### (3) Issue

First, the type of scheduling will be described.

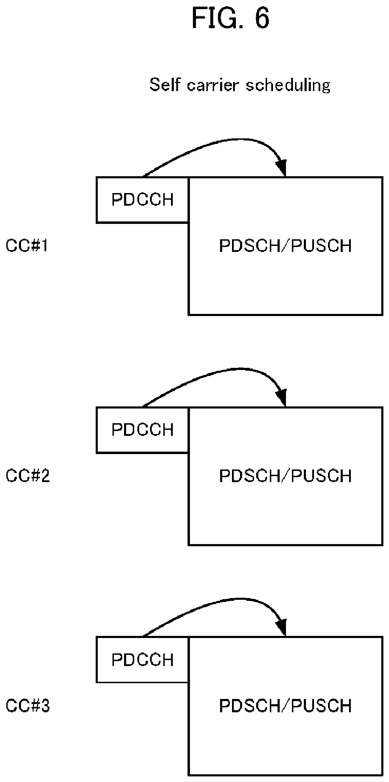

As shown in FIG. 6, a method for a PDCCH (DCI) of a certain CC to schedule a PDSCH/PUSCH of the same CC (hereinafter referred to as Self carrier scheduling) is assumed. DCI of CC#1 schedules a PDSCH/PUSCH of CC#1, DCI of CC#2 schedules a PDSCH/PUSCH of CC#2, and DCI of CC#3 schedules a PDSCH/PUSCH of CC#3, for example.

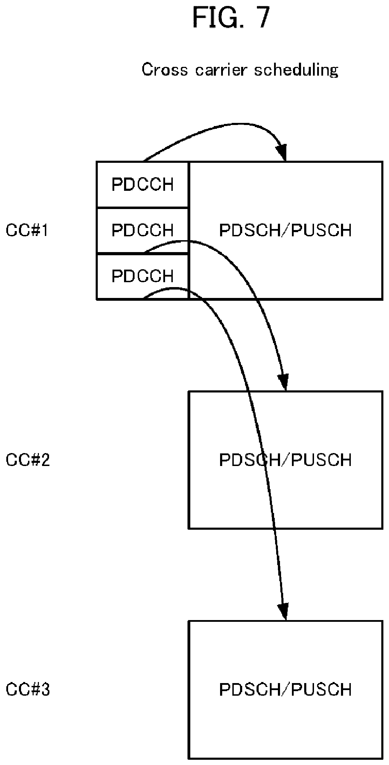

As shown in FIG. 7, a method for a PDCCH (DCI) of a certain CC to schedule PDSCH/PUSCH of different CCs (hereinafter referred to as Cross carrier scheduling) is assumed. DCI of CC#1 schedules a PDSCH/PUSCH of CC#1, the DCI of CC#1 schedules a PDSCH/PUSCH of CC#2, and the DCI of CC#1 schedules a PDSCH/PUSCH of CC#3, for example. In Cross carrier scheduling, pieces of DCI which schedule PDSCH/PUSCH of each CC are transmitted separately.

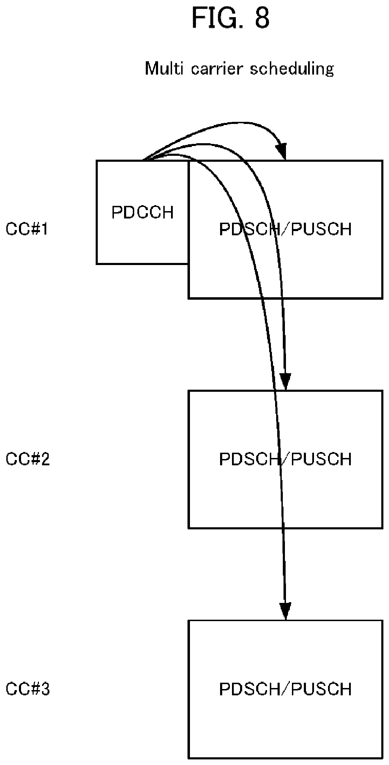

As shown in Fig. 8, a method for a PDCCH (DCI) of a certain CC to schedule PDSCH/PUSCH of two or more CCs (hereinafter referred to as Multi carrier scheduling) is assumed. One piece of DCI of CC#1 schedules PDSCH/PUSCH of CC#1, CC#2, and CC#3, for example. Multi carrier scheduling is synonymous with Single DCI Multi-carrier PDSCH/PUSCH scheduling. As described above, Multi carrier scheduling is a newly introduced mechanism.

The DCI used in Self carrier scheduling and Cross carrier scheduling is the existing DCI (for example, DCI formats 0_0 / 0_1 / 0_2 / 1_0 / 1_1 / 1_2, and the like). Meanwhile, the DCI used in Multi carrier scheduling is the specific DCI (for example, DCI formats 0_X / 1_X).

Second, a control for aligning the size of the existing DCI (hereinafter referred to as existing control) will be described. The existing control may be referred to as a first control. The existing control may be considered to be a control performed by the gNB 100 (control unit 130). The existing control may include the following procedures.

In Step 0, the size of the DCI format 0_0 is aligned with the size of the DCI format 1_0, and the formats are monitored in a Common Search Space (CSS). Specifically, Step 0 may include the following procedures. (1) The size of the DCI format 0_0 and the size of the DCI format 1_0 monitored in the CSS are determined. Here, the size of a DL BWP may be CORESET #0 or an initial DL BWP, and the size of a UL BWP may be an initial UL BWP. (2) If the size of the DCI format 0_0 is smaller than the size of the DCI format 1_0, zero padding is performed on the DCI format 0_0. This aligns the size of the DCI format 0_0 with the size of the DCI format 1_0. Meanwhile, if the size of the DCI format 0_0 is larger than the size of the DCI format 1_0, a first Most Significant Bit (MSB) and thereafter included in an FDRA field of the DCI format 0_0 are round off. This aligns the size of the DCI format 0_0 with the size of the DCI format 1_0.

In Step 1, the size of the DCI format 0_0 and the size of the DCI format 1_0 which are monitored in a User-specific Search Space (USS) are aligned. Specifically, Step 1 may include the following procedures. (1) The size of the DCI format 0_0 and the size of the DCI format 1_0 monitored in the USS are determined. Here, the size of a DL BWP may be an active DL BWP, and the size of a UL BWP may be an active UL BWP. (2) If the size of the DCI format 0_0 is smaller than the size of the DCI format 1_0, zero padding is performed on the DCI format 0_0. This aligns the size of the DCI format 0_0 with the size of the DCI format 1_0. Meanwhile, if the size of the DCI format 0_0 is larger than the size of the DCI format 1_0, zero padding is performed on the DCI format 1_0. This aligns the size of the DCI format 1_0 with the size of the DCI format 0_0.

In Step 2, the size of the DCI format 0_1 is aligned between a supplementaryUplink (SUL) and a non-SUL. Specifically, Step 2 may include the following procedures. (1) The size of the DCI format 0_1 and the size of the DCI format 1_1 monitored in the USS are determined. (2) The size of the DCI format 0_1 of the SUL and the size of the DCI format 0_1 of the non-SUL are aligned by zero padding. (3) Suppose that the size of the DCI format 0_1 is equal to the size of the DCI formats 0_0 / 1_0. In the above case, in order to distinguish the DCI format 0_1 from the DCI formats 0_0 / 1_0, zero padding of 1 bit is performed on the DCI format 0_1. (4) Suppose that the size of the DCI format 1_1 is equal to the size of the DCI formats 0_0 / 1_0. In the above case, in order to distinguish the DCI format 1_1 from the DCI formats 0_0 / 1_0, zero padding of 1 bit is performed on the DCI format 1_1.

In Step 2A, the size of the DCI format 0_2 is aligned between the SUL and non-SUL. Specifically, Step 2A may include the following procedures. (1) The size of the DCI format 0_2 and the size of the DCI format 1_2 monitored in the USS are determined. (2) The size of the DCI format 0_2 of the SUL and the size of the DCI format 0_2 of the non-SUL are aligned by zero padding.

In Step 3, it is determined whether a restriction on DCI as a monitoring target (hereinafter referred to as existing restriction) is satisfied. The existing restriction may be referred to as a first restriction. The existing restriction may be a restriction in which the size of different DCI is four or less relative to a certain cell, and the size of different DCI scrambled by C-RNTI is three or less, for example. If the existing restriction is satisfied, the existing control ends.

If the existing restriction is not satisfied, in Step 4, the following control may be performed as the existing control.

In Step 4A, the size of the fallback DCI (DCI formats 0_0 / 1_0) is aligned. Specifically, Step 4A may include the following procedures. (1) The padding bit added in Step 2 is removed. (2) The size of the DCI format 0_0 and the size of the DCI format 1_0 monitored in the USS are determined. The size of a DL BWP may be CORESET #0 or an initial DL BWP, and the size of a UL BWP may be an initial UL BWP. (3) If the size of the DCI format 0_0 is smaller than the size of the DCI format 1_0, zero padding is performed on the DCI format 0_0. This aligns the size of the DCI format 0_0 with the size of the DCI format 1_0. Meanwhile, if the size of the DCI format 0_0 is larger than the size of the DCI format 1_0, a first MSB and thereafter included in an FDRA field of the DCI format 0_0 are round off. This aligns the size of the DCI format 0_0 with the size of the DCI format 1_0.

If the existing restriction is satisfied by Step 4A, the existing control ends, and alternatively if the existing restriction is not satisfied by Step 4A, Step 4B is performed.

In Step 4B, the size of the compact DCI (DCI formats 0_2 / 1_2) is aligned. Specifically, Step 4B may include the following procedures. (1) If the size of the DCI format 0_2 is smaller than the size of the DCI format 1_2, zero padding is performed on the DCI format 0_2. This aligns the size of the DCI format 0_2 with the size of the DCI format 1_2. Meanwhile, if the size of the DCI format 0_2 is larger than the size of the DCI format 1_2, zero padding is performed on the DCI format 1_2. This aligns the size of the DCI format 1_2 with the size of the DCI format 0_2.

If the existing restriction is satisfied by Step 4B, the existing control ends, and alternatively if the existing restriction is not satisfied by Step 4B, Step 4C is performed.

In Step 4C, the size of the non-fallback DCI (DCI formats 0_1 / 1_1) is aligned. Specifically, Step 4C may include the following procedures. (1) If the size of the DCI format 0_1 is smaller than the size of the DCI format 1_1, zero padding is performed on the DCI format 0_1. This aligns the size of the DCI format 0_1 with the size of the DCI format 1_1. Meanwhile, if the size of the DCI format 0_1 is larger than the size of the DCI format 1_1, zero padding is performed on the DCI format 1_1. This aligns the size of the DCI format 1_1 with the size of the DCI format 0_1.

The gNB 100 and the UE 200 may not assume the following.
- The size of different DCI is more than four relative to a certain cell.
- The size of different DCI scrambled by the C-RNTI is more than three.
- The USS DCI format 0_0 size is the same as the different USS DCI format 0_1 size.
- The USS DCI format 1_0 size is the same as the different USS DCI format 1_1 size.
- When at least one pair corresponding to PDCCH candidates of DCI formats 0_0 / 0_2 is mapped to the same resource, the USS DCI format 0_0 size is the same as the different USS DCI format 0_2 size.
- When at least one pair corresponding to PDCCH candidates of DCI formats 1_0 / 1_2 is mapped to the same resource, the USS DCI format 1_0 size is the same as the different USS DCI format 1_2 size.
- When at least one pair corresponding to PDCCH candidates of DCI formats 0_1 / 0_2 is mapped to the same resource, the USS DCI format 0_1 size is the same as the identical or different USS DCI format 0_2 size.
- When at least one pair corresponding to PDCCH candidates of DCI formats 1_1 / 1_2 is mapped to the same resource, the USS DCI format 1_1 size is the same as the identical or different USS DCI format 1_2 size.

The existing control described above may be procedures specified in TS38.212 V17.2.0 §7.3.1.0 "DCI size alignment".

Third, an issue associated with the introduction of the specific DCI will be described.

As described above, for the existing DCI, the existing restriction is specified in which the size of different DCI scrambled by the C-RNTI is three or less. This kind of existing restriction may be referred to as DCI size budget.

However, when it is necessary to monitor both the existing DCI format and the specific DCI format, it is not clear what type of DCI size budget needs to be satisfied by the existing DCI.

### (4) Operation examples

To solve the above issue, the following operation examples may be specified. When monitoring of the specific DCI format is configured, the gNB 100 and the UE 200 assume a specific control for aligning the size of DCI as a monitoring target. A format of the DCI as a monitoring target may include the format of the existing DCI, in addition to the format of the specific DCI. The specific control may be referred to as a second control in terms of comparison with the existing control.

### (4.1) Operation Example 1

In Operation Example 1, a description will be given regarding the definition of a case where both the existing DCI format and the specific DCI format are monitored.

First, the format of the existing DCI monitored at the same time as the specific DCI may be defined to include one or more DCI formats selected from DCI formats 0_0 / 0_1 / 02/10/11/12/20/21/22/23/24/25/24/25/26/27/30/31/ 4_0 / 4_1 / 4_2.

Second, the format of the DCI monitored at the same time (that is, the DCI subject to the specific control) may be defined as one or more formats selected from a format of DCI configured in the same cell, a format of DCI configured in the same bandwidth part (BWP), and a format of DCI configured in the same search range (SSSG; Search Space Set Group). The DCI monitored at the same time may include the existing DCI and the specific DCI.

According to Operation Example 1, the existing DCI monitored at the same time as the specific DCI is clarified, and the DCI subject to the specific control is also clarified. Therefore, when both the existing DCI format and the specific DCI format are monitored, the specific control (DCI size alignment) for aligning the size of the DCI can be performed appropriately.

### (4.2) Operation Example 2

In Operation Example 2, the gNB 100 and the UE 200 assume the specific control to satisfy a specific restriction on DCI monitored at the same time (that is, DCI subject to the specific control). The specific restriction may be referred to as a second restriction in terms of comparison with the existing restriction. The specific restriction may be different from the existing restriction.

The specific restriction may be predefined in the radio communication system 10 and may be notified or configured by a higher layer parameter.

The specific restriction may be a restriction on the existing DCI. The specific restriction may be a restriction in which any one or two DCI formats selected from three DCI formats {0_0 / 1_0}, {0_1 / 1_1}, {0_2 / 1_2} are configured, for example. Any one or two DCI formats may be considered to be the existing DCI format that is monitored at the same time as the specific DCI format. The existing DCI format that is monitored at the same time as the specific DCI format may be notified or configured by the higher layer parameter. The higher layer parameter may be a field included in an RRC parameter (for example, SearchSpace IE).

The specific restriction may be a restriction on the existing DCI and the specific DCI. The specific restriction may be a restriction in which any two or three DCI formats selected from four DCI formats {0_0 / 1_0}, {0_1 / 1_1}, {0_2 / 1_2}, {0_X, 1_X} are configured, for example. The existing DCI format monitored at the same time as the specific DCI format may be notified or configured by the higher layer parameter. The higher layer parameter may be the field included in the RRC parameter (for example, SearchSpace IE).

According to Operation Example 2, by clarifying the specific restriction with the introduction of the specific DCI, when both the existing DCI format and the specific DCI format are monitored, the specific control for aligning the size of DCI (DCI size alignment) can be performed appropriately.

### (4.3) Operation Example 3

In Operation Example 3, the specific control (DCI size alignment) may be applied according to at least one of SCell activation and SCell deactivation. In other words, the specific control may be applied according to the number of active SCells.

There is a possibility that the number of cells to be scheduled by the specific DCI dynamically changes according to SCell activation and SCell deactivation. The size of the specific DCI may change according to the number of cells to be scheduled. The size of a specific field (for example, NDI, RV, and the like) included in the specific DCI may change according to the number of cells to be scheduled. The specific DCI may include a field (for example, FDRA, TDRA, DCI format identifier, and the like) whose size does not change according to the number of cells to be scheduled.

From this viewpoint, in Operation Example 3, the specific control is applied according to at least one of SCell activation and SCell deactivation. As a result, the specific control (DCI size alignment) can be performed appropriately.

Further, the following options are considered as the application timing of the specific control. The application timing of the specific control may be considered to be the timing for switching the size of the DCI format.

In Option 1, the specific control may be applied at the same time as the application timing of at least one of SCell activation and SCell deactivation (activation/deactivation timing).

In Option 2, the specific control may be applied at the timing different from the application timing of at least one of SCell activation and SCell deactivation (activation/deactivation timing). The specific control may be applied at the timing later than the activation/deactivation timing. The specific control may be applied from a slot following, the timing when a specific time (for example, 3 ms) elapses, from the timing of transmitting, to a PDSCH, ACK of information for indicating at least one of SCell activation and SCell deactivation (for example, MAC CE), for example.

### (4.4) Operation Example 4

In Operation Example 4, the specific control (DCI size alignment) may be applied for each Search Space Set Group (SSSG). In other words, the specific control may be applied to a DCI format configured for a certain SSSG.

In a case where a format of DCI as a monitoring target is configured for each SSSG, the format of the DCI as a monitoring target may change for each SSSG.

From this viewpoint, in Operation Example 4, the specific control is applied for each SSSG. As a result, the specific control (DCI size alignment) can be performed appropriately.

Further, the following options can be considered as the application timing of the specific control. The application timing of the specific control can be considered as the timing for switching the size of a DCI format.

In Option 1, the specific control may be applied at the same time as the application timing of SSSG switching (switching timing).

In Option 2, the specific control may be applied at the timing different from the application timing of SSSG switching (switching timing). The specific control may be applied at the timing later than the switching timing. The specific control may be applied from a slot following, the timing when a specific time (for example, 3 ms) elapses, from the switching timing, for example.

SSSG switching may be performed according to a procedure of TS38.213 V17.2.0 §10.4 "Search space set group switching and skipping of PDCCH monitoring".

### (4.5) Operation Example 5

In Operation Example 5, when monitoring of a format of the specific DCI (DCI formats 0_X / 1_X) is configured, the DCI size budget may be defined. The following options can be considered as the DCI size budge. The DCI size budget may be considered as an example of the specific restriction.

In Option 1, the DCI size budget for the existing DCI may be a restriction in which the maximum number of different DCI sizes scrambled by the C-RNTI is a specific number (for example, 1 or 2).

In Option 2, the DCI size budget for the existing DCI may be a restriction in which the maximum number of different DCI sizes scrambled by the C-RNTI is different depending on the number of formats of the existing DCI that is monitored at the same time as the specific DCI.

In Option 3, the DCI size budget for the existing DCI and the specific DCI may be a restriction in which the maximum number of different DCI sizes scrambled by the C-RNTI is a specific number (for example, 3).

In Option 4, the DCI size budget for the existing DCI and the specific DCI may be a restriction in which the maximum number of different DCI sizes scrambled by the C-RNTI is different depending on the number of formats of DCI as a monitoring target.

According to Operation Example 5, the DCI size budget of a case where monitoring of a format of the specific DCI is configured is defined. As a result, the specific control (DCI size alignment) can be performed appropriately.

### (4.6) Operation Example 6

In Operation Example 6, procedures of the specific control may be defined. The procedures of the specific control may include procedures added to the procedures of the existing control described above. The procedures of the specific control may include the following procedures, for example.

In Step 0, the size of the DCI format 0_0 is aligned with the size of the DCI format 1_0, and the formats are monitored in the CSS. Step 0 may be similar to Step 0 of the existing control.

In Step 1, the size of the DCI format 0_0 and the size of the DCI format 1_0 which are monitored in the USS are aligned. Step 1 may be similar to Step 1 of the existing control.

In Step 2, the size of the DCI format 0_1 is aligned between the SUL and non-SUL. Step 2 may be similar to Step 2 of the existing control.

In Step 2A, the size of the DCI format 0_2 is aligned between the SUL and non-SUL. Step 2A may be similar to Step 2A of the existing control.

In Step 2B, the size of the DCI format 0_X is aligned between the SUL and non-SUL. Specifically, Step 2B may include the following procedures. (1) The size of the DCI format 0_X and the size of the DCI format 1_X are determined. (2) The SUL DCI format 0_X size and the non-SUL DCI format 0_X size are aligned by zero padding. (3) Suppose that the size of the DCI format 0_X is the same as the size of the DCI formats 0_0 / 1_0 monitored in the USS. In the above case, in order to distinguish the DCI format 0_X from the DCI formats 0_0 / 1_0, zero padding of 1 bit is performed on the DCI format 0_X. (4) Suppose that the size of the DCI format 1_X is the same as the size of the DCI formats 0_0 / 1_0 monitored in the USS. In the above case, in order to distinguish the DCI format 1_X from the DCI formats 0_0 / 1_0, zero padding of 1 bit is performed on the DCI format 1_X. (5) Suppose that the size of the DCI format 0_X is the same as the size of the DCI format 0_1 monitored in the USS. In the above case, in order to distinguish the DCI format 0_X from the DCI format 0_1, zero padding of 1 bit is performed on the DCI format 0_X. (6) Suppose that the size of the DCI format 1_X is the same as the size of the DCI format 1_0 monitored in the USS. In the above case, in order to distinguish the DCI format 1_X from the DCI format 1_0, zero padding of 1 bit is performed on the DCI format 1_X. Step 2B is procedures added to the procedures of the existing control.

In Step 3, it is determined whether a restriction on DCI as a monitoring target (specific restriction) is satisfied. As the specific restriction, the restrictions described in the operation examples described above can be used. If the specific restriction is satisfied, the specific control ends.

If the specific restriction is not satisfied, in Step 4, the following control may be performed as the specific control.

In Step 4A, the size of the fallback DCI (DCI formats 0_0 / 1_0) is aligned. Step 4A may be similar to Step 4A of the existing control.

If the specific restriction is satisfied by Step 4A, the specific control ends, and alternatively if the specific restriction is not satisfied by Step 4A, Step 4B is performed.

In Step 4B, the size of the compact DCI (DCI formats 0_2 / 1_2) is aligned. Step 4B may be similar to Step 4B of the existing control.

If the specific restriction is satisfied by Step 4B, the specific control ends, and alternatively if the specific restriction is not satisfied by Step 4B, Step 4C is performed.

In Step 4C, the size of the non-fallback DCI (DCI formats 0_1 / 1_1) is aligned. Step 4C may be similar to Step 4C of the existing control.

If the specific restriction is satisfied by Step 4C, the specific control ends, and alternatively if the specific restriction is not satisfied by Step 4C, Step 4D is performed.

In Step 4D, the size of the specific DCI (DCI formats 0_X / 1_X) is aligned. Specifically, Step 4D may include the following procedures. (1) If the size of the DCI format 0_X is smaller than the size of the DCI format 1_X, zero padding is performed on the DCI format 0_X. This aligns the size of the DCI format 0_X with the size of the DCI format 1_X. Meanwhile, if the size of the DCI format 0_X is larger than the size of the DCI format 1_X, zero padding is performed on the DCI format 1_X. This aligns the size of the DCI format 1_X with the size of the DCI format 0_X. Step 4D is procedures added to the procedures of the existing control.

In Operation Example 6, a case where Step 4D is performed after Step 4C has been exemplified. However, Operation Example 6 is not limited thereto. Step 4D may be performed before Step 4A, may be performed before Step 4B, or may be performed before Step 4C. In other words, Step 4D may be performed, when the specific restriction is not satisfied in Step 3, when the specific restriction is not satisfied by Step 4A, or when the specific restriction is not satisfied by Step 4B.

According to Operation Example 6, the procedures of the specific control are defined. Therefore, the specific control (DCI size alignment) can be performed appropriately.

### (5) Action and effect

In the embodiment, the gNB 100 and the UE 200 assume the specific control for aligning the size of the DCI, when monitoring of a format of one specific DCI which schedules a channel transmitted by two or more carriers is configured. According to this kind of configuration, even when the specific DCI is introduced, the specific control (DCI size alignment) can be performed appropriately.

### (6) Other embodiments

Although the contents of the present invention have been described in accordance with the embodiment, the present invention is not limited to the descriptions, and it is obvious to those skilled in the art that various modifications and improvements are possible.

Although not specifically described in the above disclosure, a specific parameter may be a parameter configured implicitly or explicitly by a higher layer parameter. The specific parameter may be a value of a field that can be included in DCI.

Although not specifically described in the above disclosure, the higher layer parameter may be read as an RRC parameter. The higher layer parameter may be read as a MAC CE.

Although not specifically described in the above disclosure, the following UE Capability may be defined. The following UE Capability may be reported from the UE 200 to the gNB 100. The UE Capability may include an information element indicating whether the UE 200 supports Single DCI Multi-carrier PDSCH/PUSCH scheduling, for example. The UE Capability may include an information element indicating whether the specific control is supported. The UE Capability may include an information element indicating whether one or more operation examples selected from Operation Examples 1 to 6 are supported.

The UE Capability may be defined for each UE 200, may be defined for each FR, may be defined for each TDD/FDD type, may be defined for each band, may be defined for each Band Combination (BC), may be defined for each Feature Set (FS), or may be defined for each Feature Set Per Component carrier (FSPC).

The UE Capability may be reported to a scheduling cell or to a scheduled cell. If the UE Capability is reported to the scheduled cell, the UE Capability may be notified by the scheduled cell to the scheduling cell.

In the above disclosure, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

The block diagram (FIGS. 4 and 5) used in the description of the above-described embodiment illustrates blocks in units of functions. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

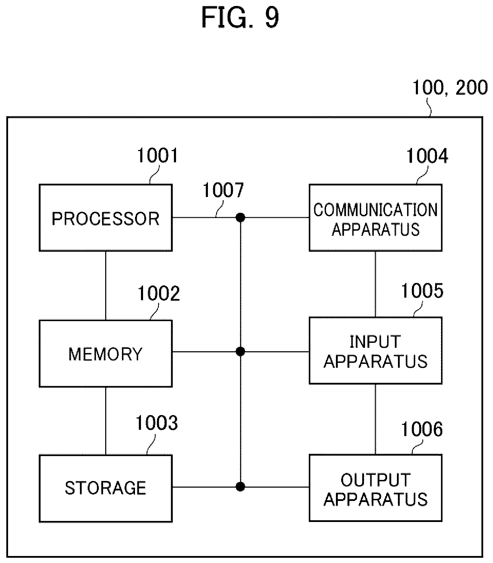

Further, the above-described gNB 100 and UE200 (the devices) may function as a computer that performs processing of a radio communication method of the present disclosure. FIG. 9 is a diagram illustrating an example of a hardware configuration of the device. As illustrated in FIG. 9, the device may be configured as a computer device including a processor 1001, a memory 1002, a storage 1003, a communication device 1004, an input device 1005, an output device 1006, a bus 1007, and the like.

Furthermore, in the following description, the term "device" can be read as meaning circuit, device, unit, or the like. The hardware configuration of the device may include one or more devices illustrated in the figure or may not include some of the devices.

Each of the functional blocks of the devices (see FIG. 4) is implemented by means of any of hardware elements of the computer device or a combination of the hardware elements.

Each function in the devices is realized by loading predetermined software (programs) on hardware such as the processor 1001 and the memory 1002 so that the processor 1001 performs arithmetic operations to control communication via the communication device 1004 and to control at least one of reading and writing of data on the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus." The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the device may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station 10. However, a combination of multiple other network nodes may be considered (e.g., MME and S-GW).

Information or signals (information and the like) may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any of a one of various different technologies. For example, data, an instruction, a command, information, a signal, a bit, a symbol, a chip, or the like, described throughout the present application, may be represented by a voltage, an electric current, electromagnetic waves, magnetic fields, magnetic particle, optical fields, a photon, or a combination thereof.

It should be noted that a term used in the present specification and/or term required for understanding of the present specification may be replaced by a term having the same or similar meaning. For example, a channel and a symbol may be a signal (signaling). Further a signal may also be a message. Further, the component carrier (CC) may be referred to as a carrier frequency, cell, frequency carrier, or the like.

As used in the present disclosure, the terms "system" and "network" are used interchangeably.

Furthermore, the information, parameters, and the like, described in the present disclosure may be expressed using absolute values, relative values from a predetermined values, or they may be expressed using corresponding different information. For example, a radio resource may be what is indicated by an index.

The names used for the parameters described above are not used as limitation. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs)).

The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a mobile station (hereinafter, a user terminal). For example, each aspect/embodiment of the present disclosure may be applied to the structure that replaces a communication between a base station and a mobile station with a communication between a plurality of mobile stations (for example, which may be referred to as "Device-to-Device (D2D)," "Vehicle-to-Everything (V2X)," and the like). In this case, mobile stations may have the functions of the base stations described above. The words such as "uplink" and "downlink" may be interpreted as the words corresponding to the terminal-to-terminal communication (for example, "side"). For example, an uplink channel, a downlink channel and so on may be interpreted as a sidelink channel.

Likewise, the mobile station in the present disclosure may be interpreted as base station. In this case, the base station may have the functions of the mobile station described above.

A radio frame may be constituted of one or a plurality of periods (frames) in the time domain. Each of one or a plurality of periods (frames) constituting a radio frame may be referred to as a "subframe."

Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

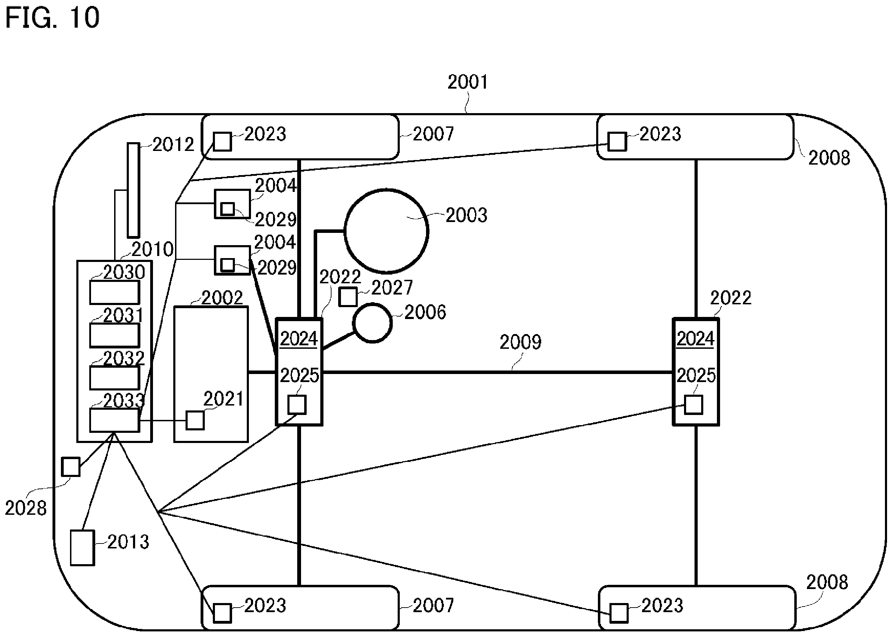

FIG. 10 shows a configuration example of a vehicle 2001. As shown in FIG. 10, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2027 provided in the vehicle. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal coming from a current sensor and input to the electronic control unit 2010 to an external device via radio communication. Further, the communication module 2013 transmits a rotation speed signal of a front wheel and a rear wheel acquired by the revolution sensor 2022, a pressure signal of a front wheel and a rear wheel acquired by a pneumatic sensor 2023, a speed signal of a vehicle acquired by a vehicle speed sensor 2024, an acceleration signal acquired by an acceleration sensor 2025, an accelerator pedal pressed-amount signal acquired by an accelerator pedal sensor 2029, a brake pedal pressed-amount signal acquired by a brake pedal sensor 2026, an operation signal of the shift lever acquired by a shift lever sensor 2027, and a detection signal acquired by an object detection sensor 2028 for detecting obstacles, vehicles, pedestrians, and the like input to the electronic control unit 2010 to an external device via radio communication.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### (Supplementary notes)

The above disclosure may be expressed as follows.

A first feature is a terminal including: a reception unit that receives downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

In the first feature, a second feature is the terminal in which, a format of the downlink control information subject to the specific control is one or more formats selected from a format of downlink control information configured in the same cell, a format of downlink control information configured in the same bandwidth part, and a format of downlink control information configured in the same search range.

In the first or second feature, a third feature is the terminal in which, the control unit assumes the specific control to satisfy a specific restriction on the downlink control information subject to the specific control.

A fourth feature is a base station including: a transmission unit that transmits downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

A fifth feature is a radio communication system including: a terminal; and a base station, in which the terminal includes: a reception unit that receives downlink control information; and a control unit that assumes a specific control for aligning a size of the downlink control information, when monitoring of a format of one specific downlink control information that schedules a channel transmitted by two or more carriers is configured, in which the specific downlink control information is one of the downlink control information.

A sixth feature is a radio communication method including: a step A of receiving downlink control information; and a step B of assuming a specific control for aligning a size of the downlink control information, when monitoring of a format of one specific downlink control information that schedules a channel transmitted by two or more carriers is configured, in which the specific downlink control information is one of the downlink control information.

### Reference Signs List

10 Radio communication system
20 NG-RAN
100 gNB
110 Reception unit
120 Transmission unit
130 Control unit
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication device
1005 Input device
1006 Output device
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a reception unit that receives downlink control information; and
a control unit that assumes a specific control for aligning a size of the downlink control information, when monitoring of a format of one specific downlink control information that schedules a channel transmitted by two or more carriers is configured, wherein
the specific downlink control information is one of the downlink control information.

2. The terminal according to claim 1, wherein
a format of the downlink control information subject to the specific control is one or more formats selected from a format of downlink control information configured in the same cell, a format of downlink control information configured in the same bandwidth part, and a format of downlink control information configured in the same search range.

3. The terminal according to claim 1, wherein
the control unit assumes the specific control to satisfy a specific restriction on the downlink control information subject to the specific control.

4. A base station comprising:
a transmission unit that transmits downlink control information; and
a control unit that assumes a specific control for aligning a size of the downlink control information, when monitoring of a format of one specific downlink control information that schedules a channel transmitted by two or more carriers is configured, wherein
the specific downlink control information is one of the downlink control information.

5. A radio communication system comprising:
a terminal; and
a base station, wherein
the terminal includes:
a reception unit that receives downlink control information; and
a control unit that assumes a specific control for aligning a size of the downlink control information, when monitoring of a format of one specific downlink control information that schedules a channel transmitted by two or more carriers is configured, and
the specific downlink control information is one of the downlink control information.

6. A radio communication method comprising:
a step A of receiving downlink control information; and
a step B of assuming a specific control for aligning a size of the downlink control information, when monitoring of a format of one specific downlink control information that schedules a channel transmitted by two or more carriers is configured, wherein
the specific downlink control information is one of the downlink control information.
